# FASCICULE DE BREVET EUROPEEN

(11) **EP 2 620 634 B1**
(45) Date de publication et mention de la délivrance du brevet: **13.05.2015**
(21) Numéro de dépôt: 13152541.2
(22) Date de dépôt: 24.01.2013
(51) Int. Cl.: F03B 13/26, F03B 3/14

(54) **Rotor d'hydrolienne comportant au moins une pâle mobile en rotation autour d'un axe radial et des moyens de limitation du mouvement en rotation de ladite pâle, et hydrolienne comprenant un tel rotor**
Rotor eines Wellenkraftwerks, der mindestens ein bewegliches Schaufelblatt umfasst, das sich um eine Radialachse dreht, und Begrenzungsmittel der Rotationsbewegung dieses Schaufelblatts, sowie Wellenkraftwerk, das einen solchen Rotor umfasst
Rotor of a marine turbine comprising at least one blade rotatably mobile about a radial axis, and means for limiting the rotational movement of said blade, and marine turbine including such a rotor

(30) Priorité: 27.01.2012 FR 1250817
(43) Date de publication de la demande: 31.07.2013
(73) Titulaire: GE Energy Power Conversion Technology Ltd, Rugby Warwickshire CV21 1BU (GB)
(72) Inventeur: Duchene, Hugo, 54000 Nancy (FR); Cagnin, Philippe, 54250 Champigneulles (FR); Girard-Pecarrere, Antoine, 17000 La Rochelle (FR)
(74) Mandataire: Serjeants LLP

(56) Documents cités:
- CN-B- 101 798 983
- DE-A1-102008 007 616
- DE-A1-102010 011 708
- US-A1- 2005 271 508
- US-A1- 2011 272 945

## Description

La présente invention concerne un rotor d'hydrolienne, le rotor étant propre à être entraîné en rotation par un courant d'un liquide, le rotor comprenant un anneau intérieur, un anneau extérieur et au moins une pâle s'étendant entre l'anneau intérieur et l'anneau extérieur selon une direction radiale, les anneaux intérieur et extérieur étant centrés sur un même axe longitudinal.

L'invention concerne également une hydrolienne comprenant un stator et un tel rotor.

On connaît un rotor d'hydrolienne du type précité. Les pâles d'un tel rotor sont solidaires mécaniquement de l'anneau intérieur et de l'anneau extérieur, et assurent alors une liaison mécanique entre l'anneau intérieur et l'anneau extérieur. Le rotor est mobile en rotation autour d'un axe longitudinal correspondant sensiblement à la direction du courant. Toutes les pâles sont positionnées avec sensiblement la même inclinaison par rapport à un plan perpendiculaire à l'axe longitudinal. L'inclinaison des pâles est une valeur prédéterminée.

Le document DE 10 2010 011 708 A1 divulgue une hydrolienne avec des pôles mobiles en rotation autour d'un axe radiale entre un anneau intérieur et un anneau extérieur, ce rotor comprenant en outre une butée basse agencée sur l'anneau intérieur pour la limitation dudit mouvement.

Toutefois, le rendement d'une hydrolienne comportant un tel rotor n'est pas optimal sur l'ensemble de la plage des vitesses de rotation du rotor, cette plage de vitesse étant par exemple comprise entre 0 et 50 tours/minute.

Le but de l'invention est donc de proposer un rotor d'hydrolienne offrant un meilleur rendement sur l'ensemble de la plage des vitesses de rotation, telles que les vitesses rotoriques comprises entre 0 et 50 tours/minute.

A cet effet, l'invention a pour objet un rotor d'hydrolienne du type précité, caractérisé en ce qu'il comprend au moins un axe radial s'étendant radialement entre l'anneau intérieur et l'anneau extérieur, en ce qu'au moins une pâle est mobile en rotation autour d'un axe radial respectif, et en ce que le rotor comprend des moyens de limitation du mouvement en rotation de ladite au moins une pâle autour de son axe radial respectif.

Suivant d'autres aspects avantageux de l'invention, le rotor comprend une ou plusieurs des caractéristiques suivantes, prises isolément ou suivant toutes les combinaisons techniquement possibles :
- les moyens de limitation comportent, pour ladite au moins une pâle, au moins une butée agencée sur au moins un anneau parmi l'anneau intérieur et l'anneau extérieur,
- les moyens de limitation comportent, pour ladite au moins une pâle, une première butée et une deuxième butée agencées sur au moins un anneau parmi l'anneau intérieur et l'anneau extérieur, la première butée étant associée à un premier sens du courant par rapport au rotor et la deuxième butée étant associée à un deuxième sens du courant par rapport au rotor,

- les moyens de limitation comportent, pour ladite au moins une pâle, une butée haute agencée sur l'anneau extérieur et une butée basse agencée sur l'anneau intérieur,
- les moyens de limitation comportent, pour ladite au moins une pâle, une première butée haute et une deuxième butée haute agencées sur l'anneau extérieur, ainsi qu'une première butée basse et une deuxième butée basse agencées sur l'anneau intérieur, les premières butées étant associées au premier sens du courant et les deuxièmes butées étant associées au deuxième sens du courant,
- les moyens de limitation comportent, pour ladite au moins une pâle, une butée haute agencée sur l'anneau extérieur, la pâle présente une position de repos en l'absence de courant, et la valeur de l'angle entre la position de repos et une position de la pâle en butée contre la butée haute est comprise entre 10 degrés et 30 degrés, de préférence égale à 20 degrés,
- les moyens de limitation comportent, pour ladite au moins une pâle, une butée basse agencée sur l'anneau intérieur, la pâle présente une position de repos en l'absence de courant, et la valeur de l'angle entre la position de repos et une position de la pâle en butée contre la butée basse est comprise entre 30 degrés et 60 degrés, de préférence égale à 45 degrés,
- le rotor comprend, pour chaque pâle, un axe radial s'étendant radialement entre l'anneau intérieur et l'anneau extérieur, chaque pâle est mobile en rotation autour de son axe radial respectif, et les moyens de limitation sont propres à limiter le mouvement en rotation de chaque pâle,
- le rotor comprend une pluralité de pâles, le nombre N de pâles étant de préférence compris entre 2 et 20, de préférence égal à 8, et
- la ou chaque pâle présente un extrados, un intrados, un bord d'attaque et un bord de fuite, le bord d'attaque étant le bord de la pâle s'étendant selon la direction radiale et disposé en amont suivant le sens de l'écoulement du liquide le long de la pâle, le bord de fuite étant le bord de la pâle opposé au bord d'attaque et disposé en aval suivant le sens de l'écoulement du liquide le long de la pâle,
dans lequel au moins une portion d'au moins une pâle présente, en section transversale selon un plan perpendiculaire à la direction radiale, un profil comportant une partie épaisse et une partie fine, la partie épaisse et la partie fine ayant chacune une épaisseur maximale selon une direction perpendiculaire à l'extrados, l'épaisseur maximale de la partie épaisse étant au moins quatre fois supérieure à l'épaisseur maximale de la partie fine, et

dans lequel la longueur curviligne de la partie fine est comprise entre 0,1 fois la longueur de la corde entre le bord d'attaque et le bord de fuite et 0,9 fois la longueur de ladite corde, de préférence comprise entre 0,25 fois la longueur de ladite corde et 0,9 fois la longueur de ladite corde.

L'invention a également pour objet une hydrolienne comprenant un rotor et un stator, caractérisée en ce que le rotor est tel que défini ci-dessus.

Ces caractéristiques et avantages de l'invention apparaîtront à la lecture de la description qui va suivre, donnée uniquement à titre d'exemple non limitatif, et faite en référence aux dessins annexés sur lesquels :
- la figure 1 est une vue en perspective d'une hydrolienne selon l'invention,
- la figure 2 est une vue schématique d'une pâle de l'hydrolienne de la figure 1,
- la figure 3 est une vue en coupe selon le plan III de la figure 2,
- la figure 4, et respectivement la figure 5, sont des vues de dessus de la pâle de la figure 2 suivant un premier sens du courant le long d'une direction longitudinale, respectivement suivant un second sens du courant opposé au premier sens, selon un premier mode de réalisation de l'invention, et
- la figure 6 est une vue analogue à celle de la figure 4 selon un deuxième mode de réalisation de l'invention, et
- la figure 7 est une vue analogue à celle de la figure 5 selon le deuxième mode de réalisation de l'invention.

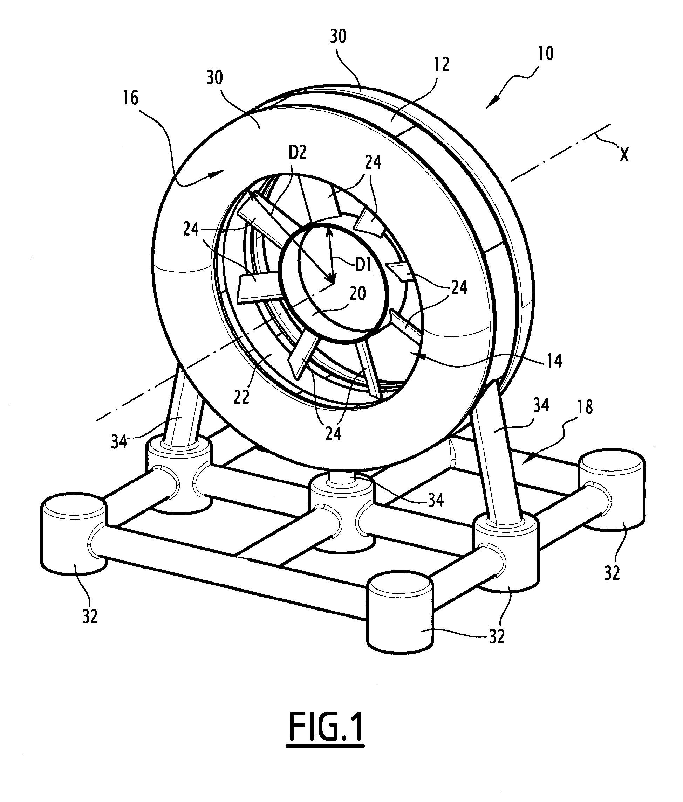

Sur la figure 1, une hydrolienne 10 comprend un stator 12, un rotor 14 mobile en rotation autour d'un axe longitudinal X, et une tuyère 16. L'hydrolienne 10 comprend également un support 18 de maintien du stator.

L'hydrolienne 10 est propre à transformer l'énergie cinétique d'un courant d'un liquide circulant à l'intérieur de la tuyère 16 selon la direction longitudinale X en énergie électrique, le courant entraînant le rotor 14 en rotation autour de l'axe longitudinal X, et la rotation du rotor 14 par rapport au stator 12 générant une énergie électrique.

L'hydrolienne 10 est, par exemple, une hydrolienne sous-marine destinée à utiliser l'énergie cinétique des courants marins. En variante, l'hydrolienne est destinée à être immergée dans un cours d'eau, afin de convertir l'énergie hydraulique du cours d'eau en énergie électrique.

Le stator 12 est en forme d'un anneau de révolution autour de l'axe longitudinal X. Le stator 12 comporte, comme connu en soi, des parties magnétiques actives statoriques, non représentées.

Le rotor 14 comprend un anneau intérieur 20, un anneau extérieur 22 et une pluralité de pâles 24 s'étendant selon une direction radiale R, perpendiculaire à l'axe longitudinal X, entre l'anneau intérieur 20 et l'anneau extérieur 22. Le nombre N de pâles 24 est de préférence compris entre 2 et 20.

Dans l'exemple de réalisation de la figure 1, le rotor 14 comporte huit pâles réparties angulairement sur la périphérie extérieure de l'anneau intérieur 20, et N est égal à 8. Autrement dit, l'écart angulaire entre deux pâles successives est sensiblement égal à 45°.

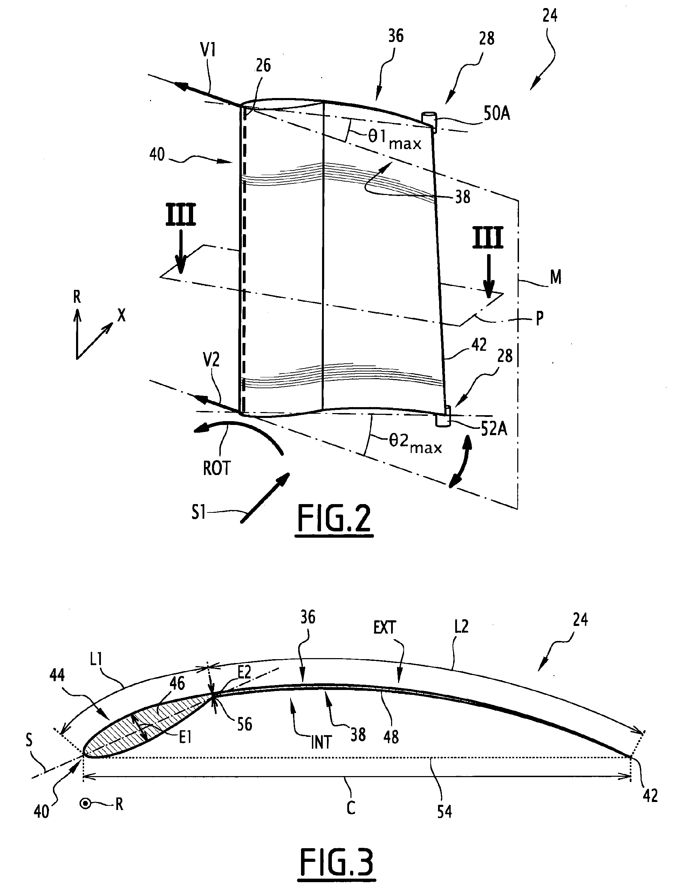

Le rotor 14 comprend au moins un axe radial 26, visible sur la figure 2, s'étendant radialement entre l'anneau intérieur 20 et l'anneau extérieur 22, et au moins une pâle 24 est mobile en rotation autour d'un axe radial 26 respectif. Le rotor 14 comprend en outre des moyens 28 de limitation du mouvement en rotation de ladite au moins une pâle 24 autour de son axe radial 26 respectif, comme représenté sur la figure 2.

Dans le mode de réalisation décrit, le rotor 14 comprend, pour chaque pâle 24, un axe radial 26 respectif s'étendant radialement entre l'anneau intérieur 20 et l'anneau extérieur 22, et chaque pâle 24 est mobile en rotation autour de son axe radial 26. Autrement dit, le rotor 14 comprend N axes radiaux 26.

En variante non représentée, le rotor 14 comprend, seulement pour une ou plusieurs pâles 24, également appelées pâles mobiles, un axe radial 26 respectif s'étendant radialement entre l'anneau intérieur 20 et l'anneau extérieur 22. Chaque pâle mobile est alors adaptée pour tourner autour de son axe radial 26, les autres pâles 24, également appelées pâles fixes, étant solidaires mécaniquement des anneaux intérieur 20 et/ou extérieur 22 selon un angle d'inclinaison prédéterminé avec le plan perpendiculaire à l'axe longitudinal X.

Le rotor 14 comprend également des parties magnétiques actives rotoriques, non représentées, agencées sur la périphérie extérieure de l'anneau extérieur 22 et propres à coopérer avec les parties magnétiques actives statoriques, afin de générer un champ magnétique lors de la rotation du rotor 14 autour de l'axe longitudinal X et à l'intérieur du stator 12.

La tuyère 16 comporte deux demi-tuyères 30 fixées de part et d'autre du stator 12 selon la direction longitudinale X, comme représenté sur la figure 1. La tuyère 16 est en forme d'un tore de révolution autour de l'axe longitudinal X, le tore présentant une section transversale de forme oblongue. Chaque demi-tuyère 30 présente, en section suivant un plan longitudinal parallèle à l'axe longitudinal X, une forme de U, les deux extrémités du U étant fixées au stator 12.

Le support de maintien 18 comporte une pluralité de plots 32 d'appui sur le sol et trois bras verticaux 34 de maintien du stator à l'écart du sol. Le support de maintien 18 comporte, par exemple, un châssis tubulaire.

L'anneau intérieur 20 et l'anneau extérieur 22 sont chacun en forme d'un tube cylindrique de révolution autour de l'axe longitudinal X. L'anneau intérieur 20 et l'anneau extérieur 22 sont centrés sur l'axe longitudinal X. La longueur de l'anneau intérieur 20 et la longueur de l'anneau extérieur 22 selon la direction longitudinale X sont sensiblement égales, comme représenté sur la figure 1. En variante, la longueur de l'anneau intérieur 20 et la longueur de l'anneau extérieur 22 selon la direction longitudinale X sont différentes.

L'anneau intérieur 20 présente un premier diamètre D1 dans le plan perpendiculaire à l'axe longitudinal X, et l'anneau extérieur 22 présente un deuxième diamètre D2 de valeur supérieure à celle du premier diamètre D1. La valeur du premier diamètre D1 est, par exemple, comprise entre 2 000 mm et 8 000 mm. La valeur du deuxième diamètre D2 est, par exemple, comprise entre 4 000 mm et 18 000 mm.

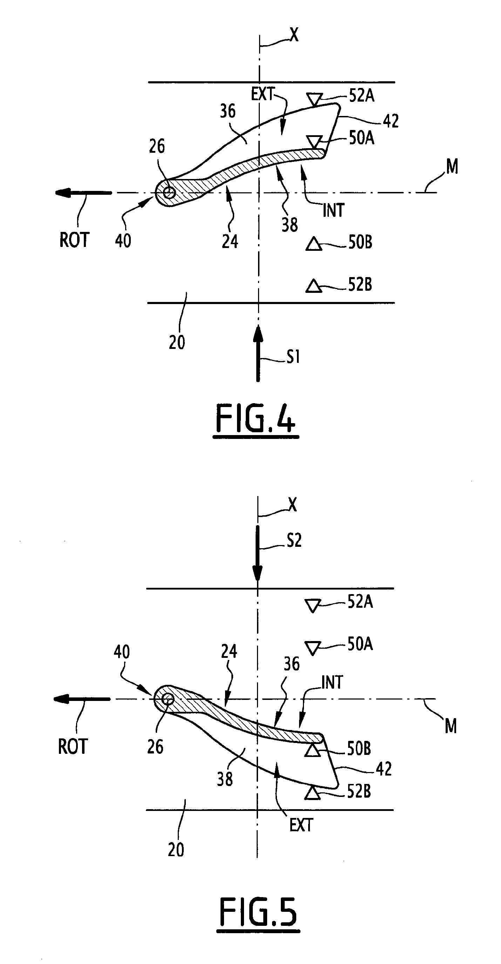

Chaque pâle 24 comporte une première face 36, une deuxième face 38, un bord d'attaque 40 et un bord de fuite 42, comme représenté sur la figure 2. Suivant un premier sens S1 du courant d'eau le long de la direction longitudinale X, la première face 36 correspond à l'extrados EXT et la deuxième face 38 correspond à l'intrados INT, l'intrados INT étant la face de la pâle 24 soumise à la pression du courant d'eau et l'extrados EXT étant la face de la pâle 24 du côté opposé à l'intrados INT, comme représenté sur la figure 4. Suivant un second sens S2 du courant, opposé au premier sens S1 la première face 36 correspond à l'intrados INT et la deuxième face 38 correspond à l'extrados EXT, comme représenté sur la figure 5. Le bord d'attaque 40 est le bord de la pâle 24 s'étendant selon la direction radiale R et disposé en amont suivant le sens de l'écoulement de l'eau le long de la pâle 24. Le bord de fuite 42 est le bord de la pâle 24 opposé au bord d'attaque 40 et disposé en aval suivant le sens de l'écoulement de l'eau. Autrement dit, le bord d'attaque 40 fait face au flux d'eau, et le bord de fuite 42 correspond à la partie arrière de la pâle 24 suivant le sens de l'écoulement de l'eau.

Au moins une portion de la pâle 24 selon la direction radiale R présente, en section transversale selon un plan de coupe P perpendiculaire à la direction radiale R, un profil 44 comportant une partie épaisse 46 et une partie fine 48.

En variante, la pâle 24 présente, en section transversale selon le plan de coupe P, un profil comportant seulement la partie épaisse 46.

En variante, la pâle 24 présente, en section transversale selon le plan de coupe P, un profil comportant seulement la partie fine 48.

En variante encore, la pâle 24 présente, en section transversale selon le plan de coupe P, un profil de forme rectangulaire, la pâle 24 étant en forme d'un parallélépipède rectangle. Autrement dit, la pâle 24 est sensiblement plane.

L'axe radial 26 est solidaire d'au moins un anneau parmi l'anneau intérieur 20 et l'anneau extérieur 22. Dans l'exemple de réalisation des figures 1 et 2, l'axe radial 26 est solidaire des anneaux intérieur 20 et extérieur 22, une extrémité de l'axe radial 26 étant fixée à l'anneau intérieur 20 et l'autre extrémité étant fixée à l'anneau extérieur 22. Chaque extrémité de l'axe radial 26 est fixée sensiblement au milieu de l'anneau 20, 22 correspondant selon la direction longitudinale X.

En variante, l'axe radial 26 est solidaire de la pâle 24, et est mobile en rotation par rapport aux anneaux intérieur 20 et extérieur 22.

L'axe radial 26 est réalisé, par exemple, en forme d'une tige en acier, ou en aluminium, ou encore en matériau composite.

En variante, l'axe radial 26 est en forme de protubérances fixées à la pâle 24 et en saillie par rapport à la pâle 24, celles-ci étant reçues dans des orifices de réception correspondants, ménagés dans les anneaux intérieur 20 et extérieur 22. Les protubérances formant l'axe radial 26 sont, par exemple, venues de matière avec la pâle 24.

Les moyens de limitation 28 comportent pour chaque pâle 24 mobile en rotation autour d'un axe radial 26 correspondant, au moins une butée 50A, 50B, 52A, 52B agencée sur au moins un anneau parmi l'anneau intérieur 20 et l'anneau extérieur 22.

Dans l'exemple de réalisation des figures 2, 4 et 5, les moyens de limitation 28 comportent, pour chaque pâle 24 mobile en rotation autour d'un axe radial 26 correspondant, une première butée haute 50A et une deuxième butée haute 50B agencée sur l'anneau extérieur 22, ainsi qu'une première butée basse 52A et une deuxième butée basse 52B agencée sur l'anneau intérieur 20. Autrement dit, les moyens de limitation 28 comportent N premières butées hautes 50A et N deuxièmes butées hautes 50B agencées sur l'anneau extérieur 22, ainsi que N premières butées basses 52A et N deuxièmes butées basses 52B agencées sur l'anneau intérieur 20.

En variante non représentée, les moyens de limitation 28 comportent une tige de butée, s'étendant sensiblement selon la direction radiale R et formant butée sur toute la hauteur de la pâle 24 selon la direction radiale R.

En variante encore, les moyens de limitation 28 comportent des ressorts de retenue destinés à retenir la pâle 24 au voisinage du bord de fuite 42.

En variante encore, les moyens de limitation 28 comportent des ressorts de torsion destinés à retenir la pâle 24 au voisinage du bord d'attaque 40.

Le bord d'attaque 40 et le bord de fuite 42 sont reliés par un segment fictif 54, représenté en traits pointillés sur la figure 3, également appelé corde entre le bord d'attaque 40 et le bord de fuite 42.

Le profil 44 présente, du côté de l'intrados INT, un point d'inflexion 56.

La partie épaisse 46 a une première épaisseur maximale E1 selon une direction perpendiculaire à l'extrados EXT, et présente une première longueur curviligne L1 du côté de l'extrados EXT, comme représenté sur la figure 3.

La partie épaisse 46 présente un plan de symétrie S, visible sur la figure 3, le plan de symétrie S étant parallèle à la direction radiale R. La partie épaisse 46 est, par exemple, réalisée en un matériau métallique, tel que de l'aluminium.

La partie fine 48 a une deuxième épaisseur maximale E2 selon une direction perpendiculaire à l'extrados EXT, et présente une deuxième longueur curviligne L2 du côté de l'extrados EXT. La partie fine 48 est, par exemple, réalisée en un matériau composite, ou en tôle, ou encore en polyétheréthercétone, également appelé PEEK (de l'anglais *PolyEtherEtherKetone*)*.*

En variante, la partie épaisse 46 et la partie fine 48 sont réalisées en un matériau thermoplastique ou thermodurcissable. En variante encore, la partie épaisse 46 est réalisée en un matériau composite.

La corde 54 entre le bord d'attaque et le bord de fuite présente une longueur C.

Le point d'inflexion 56 correspond sensiblement à la délimitation entre la partie épaisse 46 et la partie fine 48.

La deuxième longueur curviligne L2 est comprise entre 0,1 fois la longueur C de la corde 54 entre le bord d'attaque et le bord de fuite et 0,9 fois la longueur C de ladite corde 54. La deuxième longueur curviligne L2 est de préférence comprise entre 0,25 fois la longueur C et 0,9 fois la longueur C.

La première épaisseur maximale E1 est au moins quatre fois supérieure à la deuxième épaisseur maximale E2. La première épaisseur maximale E1 est inférieure ou égale à 0,25 fois la longueur C de la corde entre le bord d'attaque 40 et le bord de fuite 42.

Dans l'exemple de réalisation de la figure 2, toute la pâle 24 présente la partie épaisse 46 et la partie fine 48 quelle que soit la position du plan de coupe P selon la direction radiale R. La pâle 24 présente, par exemple, le même profil 44 quelle que soit la position du plan de coupe P selon la direction radiale R.

En variante non représentée, la longueur C de la corde 54 entre le bord d'attaque 40 et le bord de fuite 42 est de valeur variable en fonction de la position selon la direction radiale R du plan de coupe P. Autrement dit, le profil 44 est de forme variable en fonction de la position du plan de coupe P selon la direction radiale R.

La première butée haute 50A et la deuxième butée haute 50B sont solidaires de l'anneau extérieur 22.

La première butée haute 50A et la deuxième butée haute 50B sont disposées de manière sensiblement symétrique par rapport à un plan médian M de l'anneau extérieur perpendiculaire à l'axe longitudinal X, comme représenté sur les figures 4 et 5, où l'anneau extérieur 22 n'a pas été représenté pour la clarté du dessin.

La première butée basse 52A et la deuxième butée basse 52B sont solidaires de l'anneau intérieur 20 et sont disposées de manière sensiblement symétrique par rapport au plan médian M.

Les premières butées 50A, 52A sont associées au premier sens du courant S1, comme représenté sur la figure 4, et les deuxièmes butées 50B, 52B sont associées au deuxième sens du courant S2, comme représenté sur la figure 5.

Les première et deuxième butées hautes 50A, 50B sont positionnées de telle sorte que la valeur d'un angle haut maximal Θ1ₘₐₓ entre une position de repos de la pâle 24 en l'absence de courant et une position de la pâle 24 en butée contre la butée haute 50A, 50B respective est comprise entre 10° et 30°, de préférence égale à 20°.

La valeur de l'angle entre une position de la pâle 24 en butée contre la première butée haute 50A et une position de la pâle en butée contre la deuxième butée haute 50B est comprise entre 20 et 60°, de préférence égale à 40°, les première et deuxième butées hautes 50A, 50B étant sensiblement symétriques l'une de l'autre par rapport au plan médian M, et la position de repos de la pâle 24 étant sensiblement confondue avec le plan médian M.

Les première et deuxième butées basses 52A, 52B sont positionnées de telle sorte que la valeur d'un angle bas maximal Θ2ₘₐₓ entre la position de repos et une position de la pâle en butée contre la butée basse 52A, 52B respective est comprise entre 30° et 60°, de préférence égale à 45°.

La valeur de l'angle entre une position de la pâle 24 en butée contre la première butée basse 52A et une position de la pâle 24 en butée contre la deuxième butée basse 52B est comprise entre 60° et 120°, de préférence égale à 90°, les première et deuxième butées basses 52A, 52B étant sensiblement symétriques l'une de l'autre par rapport au plan médian M.

La valeur de l'angle haut maximal Θ1ₘₐₓ est choisie inférieure à la valeur de l'angle bas maximal Θ2ₘₐₓ étant donné que la vitesse tangentielle en haut de pâle (flèche V1) est supérieure à la vitesse tangentielle en bas de pâle (flèche V2), comme représenté sur la figure 2.

Le fonctionnement de l'hydrolienne 10 selon l'invention va être à présent expliqué à l'aide des figures 4 et 5.

En l'absence de courant d'eau et lorsque le rotor 14 est à l'arrêt, aucun écoulement d'eau ne circule le long de la pâle 24. La pâle 24 est alors en position de repos, les bords d'attaque 40 et de fuite 42 étant disposés sensiblement dans le plan médian M.

Lorsque l'hydrolienne 10 est placée dans un courant d'eau, la pâle 24 se vrille fortement sous l'effet du courant jusqu'à venir en butée contre les premières butées haute 50A et basse 52A lorsque le courant est suivant le premier sens S1, comme représenté sur la figure 4. L'appui du courant sur les pâles 24 entraîne alors le rotor 14 en rotation autour de l'axe longitudinal X dans le sens de la flèche ROT. La vitesse de rotation est initialement faible et augmente avec l'écoulement de l'eau le long de la pâle 24.

L'angle entre le bord extérieur de la pâle 24, en regard de l'anneau extérieur 22, et le plan médian M est appelé angle haut Θ1, et l'angle entre le bord intérieur de la pâle 24, en regard de l'anneau intérieur 20, et le plan médian M est appelé angle bas Θ2. Un vrillage de la pâle 24 correspond alors à une différence entre la valeur de l'angle haut Θ1 et celle de l'angle bas Θ2.

Le vrillage de la pâle 24, l'angle haut Θ1 et l'angle bas Θ2 diminuent avec l'augmentation de la vitesse de rotation du rotor 14. La pâle 24 commence à s'écarter des premières butées haute 50A et basse 52A, pendant que la vitesse de rotation continue d'augmenter.

Lorsque la vitesse de rotation présente sa valeur nominale, le vrillage de la pâle 24 est relativement faible, et la pâle 24 est à l'écart des premières butées haute 50A et basse 52A.

L'hydrolienne 10 selon l'invention fonctionne de manière analogue suivant les deux sens S1, S2 du courant, chaque pâle 24 étant suffisamment flexible, de par la longueur curviligne L2 de la partie fine 48 pour que la première face 36 corresponde à l'extrados EXT suivant le premier sens S1 du courant (figure 4) et à l'intrados INT suivant le second sens S2 du courant (figure 5).

Lorsque le courant d'eau est orienté suivant le second sens S2, la pâle 24 est alors en butée contre les deuxièmes butées haute 50B et basse 52B pour de faibles vitesses de rotation du rotor 14, comme représenté sur la figure 5.

De manière analogue à ce qui a été décrit précédemment en regard de la figure 4 pour le premier sens du courant S1, lorsque la vitesse de rotation du rotor 14 augmente, chaque pâle 24 se décolle progressivement des deuxièmes butées haute 50B et basse 52B et le vrillage de chaque pâle 24 diminue.

Lorsque le rotor 14 présente sa vitesse de rotation nominale, chaque pâle 24 est à l'écart des deuxièmes butées haute 50B et basse 52B, et le vrillage de chaque pâle 24 est faible.

L'inclinaison des pâles 24 par rapport à un plan perpendiculaire à l'axe longitudinal X présente ainsi une valeur variable. L'inclinaison de chaque pâle 24 s'adapte automatiquement à l'écoulement de l'eau le long de la pâle 24 et à la vitesse de rotation du rotor 14, chaque pâle étant mobile en rotation autour de son axe radial 26. Les moyens de limitation 28 permettent d'éviter un positionnement suivant un plan longitudinal parallèle à l'axe longitudinal X de chaque pâle 24, afin de conserver une force d'appui minimale du courant d'eau sur chaque pâle 24.

L'homme du métier remarquera que le sens de rotation du rotor 14 (flèche ROT) est le même quel que soit le sens du courant S1, S2 le long de la direction longitudinale X, ce qui facilite l'exploitation de l'hydrolienne 10 selon l'invention. En effet, avec les hydroliennes actuelles, un changement de sens du courant d'eau se traduit par une inversion du sens de rotation du rotor. Cette inversion du sens de rotation est ralentie par l'inertie du rotor, ce qui empêche d'exploiter pleinement l'hydrolienne, par perte de temps liée à l'inversion du sens de rotation.

On conçoit ainsi que le rotor 14 selon l'invention offre un meilleur rendement sur l'ensemble de la plage des vitesses de rotation, telles que les vitesses rotoriques comprises entre 0 et 50 tours/minute, et quel que soit le sens du courant.

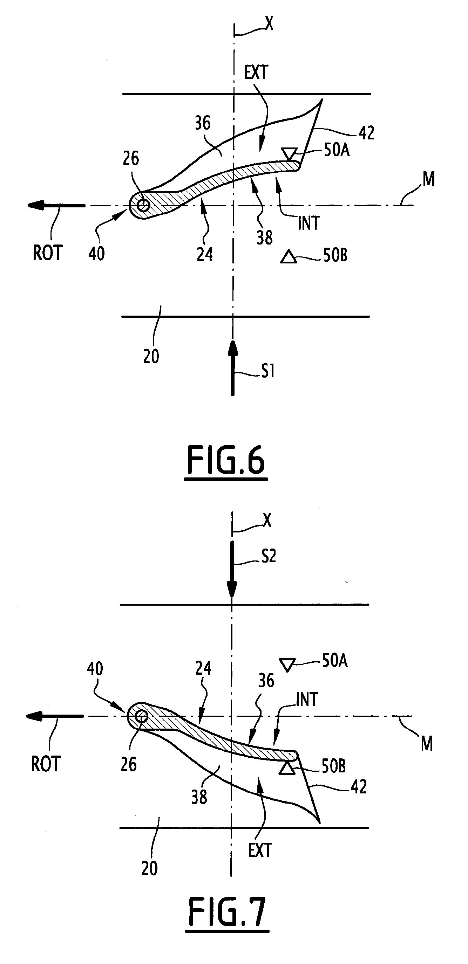

Les figures 6 et 7 illustrent un deuxième mode de réalisation de l'invention pour lequel les éléments analogues au premier mode de réalisation, décrits précédemment, sont repérés par des références identiques, et ne sont pas décrits à nouveau.

Selon le deuxième mode de réalisation, les moyens de limitation 28 comportent, pour chaque pâle 24 mobile en rotation autour de son axe radial 26, seulement la première butée haute 50A et la deuxième butée haute 50B agencées sur l'anneau extérieur 22, en l'absence de butée basse agencée sur l'anneau intérieur 20.

La valeur de l'angle haut maximal Θ1ₘₐₓ entre la position de repos de la pâle 24 et une position de la pâle 24 en butée contre la première butée haute 50A respectivement la deuxième butée haute 50B, est comprise entre 10° et 30°, de préférence égale à 20°.

Le fonctionnement de ce deuxième mode de réalisation est analogue à celui du premier mode de réalisation, que ce soit suivant le premier sens du courant S1 (figure 6) ou selon le second sens du courant S2 (figure 7), et n'est pas décrit à nouveau.

Selon ce deuxième mode de réalisation, les moyens de limitation 28 comportent un nombre plus faible de butées 50A, 50B, ce qui diminue les coûts. Les autres avantages de ce deuxième mode de réalisation sont analogues à ceux du premier mode de réalisation, et ne sont pas décrits à nouveau.

Selon un troisième mode de réalisation, non représenté, les moyens de limitation 28 comportent, pour chaque pâle 24 mobile en rotation autour de son axe radial 26, seulement la première butée basse 52A et la deuxième butée basse 52B agencées sur l'anneau intérieur 20, en l'absence de butée haute agencée sur l'anneau extérieur 22.

Selon ce troisième mode de réalisation, la valeur de l'angle bas maximal Θ2ₘₐₓ entre la position de repos et une position de la pâle 24 en butée contre la butée basse 52A, 52B respective est comprise entre 30° et 60°, de préférence égale à 45°.

L'inclinaison des pâles 24 par rapport à un plan perpendiculaire à l'axe longitudinal X présente également une valeur variable, et s'adapte automatiquement à l'écoulement de l'eau et à la vitesse rotorique, chaque pâle étant mobile en rotation autour de son axe radial 26, les moyens de limitation 28 permettant d'éviter un positionnement suivant un plan longitudinal parallèle à l'axe longitudinal X de chaque pâle 24.

On conçoit ainsi que le rotor 14 selon l'invention offre un meilleur rendement sur l'ensemble de la plage des vitesses de rotation, telles que les vitesses rotoriques comprises entre 0 et 50 tours/minute, et quel que soit le sens du courant.

## Revendications

1. Rotor (14) d'hydrolienne, le rotor (14) étant propre à être entraîné en rotation par un courant d'un liquide, le rotor (14) comprenant un anneau intérieur (20), un anneau extérieur (22) et au moins une pâle (24) s'étendant entre l'anneau intérieur (20) et l'anneau extérieur (22) selon une direction radiale (R), les anneaux intérieur (20) et extérieur (22) étant centrés sur un même axe longitudinal (X); ce rotor comprenant
au moins un axe radial (26) s'étendant radialement entre l'anneau intérieur (20) et l'anneau extérieur (22), au moins une pâle (24) mobile en rotation autour d'un axe radial (26) respectif, et (14) des moyens (28) de limitation du mouvement en rotation de ladite au moins une pâle (24) autour de son axe radial (26) respectif, ledits moyens de limitation (28) comportent, pour ladite au moins une pâle (24), une butée haute (50A, 50B) agencée sur l'anneau extérieur (22) et ils sont **caractérisé en ce qu'**ils comprendent une butée basse (52A, 52B) agencée sur l'anneau intérieur (20).

2. Rotor (14) selon la revendication 1, dans lequel les moyens de limitation (28) comportent, pour ladite au moins une pâle (24), une première butée (50A, 52A) et une deuxième butée (50B, 52B) agencées sur au moins un anneau parmi l'anneau intérieur (20) et l'anneau extérieur (22), la première butée (50A, 52A) étant associée à un premier sens (S1) du courant par rapport au rotor (14) et la deuxième butée (50B, 52B) étant associée à un deuxième sens (S2) du courant par rapport au rotor (14).

3. Rotor (14) selon la revendication 2, dans lequel les moyens de limitation (28) comportent, pour ladite au moins une pâle (24), une première butée haute (50A) et une deuxième butée haute (50B) agencées sur l'anneau extérieur (22), ainsi qu'une première butée basse (52A) et une deuxième butée basse (52B) agencées sur l'anneau intérieur (20), les premières butées (50A, 52A) étant associées au premier sens du courant (S1) et les deuxièmes butées (50B, 52B) étant associées au deuxième sens du courant (S2).

4. Rotor (14) selon l'une quelconque des revendications précédentes, dans lequel les moyens de limitation (28) comportent, pour ladite au moins une pâle (24), une butée haute (50A, 50B) agencée sur l'anneau extérieur (22), la pâle (24) présente une position de repos en l'absence de courant, et la valeur de l'angle (θ1ₘₐₓ) entre la position de repos et une position de la pâle (24) en butée contre la butée haute est comprise entre 10 degrés et 30 degrés, de préférence égale à 20 degrés.

5. Rotor (14) selon l'une quelconque des revendications précédentes, dans lequel les moyens de limitation (28) comportent, pour ladite au moins une pâle (24), une butée basse (52A, 52B) agencée sur l'anneau intérieur (20), la pâle (24) présente une position de repos en l'absence de courant, et la valeur de l'angle (θ2ₘₐₓ) entre la position de repos et une position de la pâle (24) en butée contre la butée basse (52A, 52B) est comprise entre 30 degrés et 60 degrés, de préférence égale à 45 degrés.

6. Rotor (14) selon l'une quelconque des revendications précédentes, dans lequel le rotor (14) comprend, pour chaque pâle (24), un axe radial (26) s'étendant radialement entre l'anneau intérieur (20) et l'anneau extérieur (22), chaque pâle (24) est mobile en rotation autour de son axe radial (26) respectif, et les moyens de limitation (28) sont propres à limiter le mouvement en rotation de chaque pâle (24).

7. Rotor (14) selon l'une quelconque des revendications précédentes, dans lequel le rotor (14) comprend une pluralité de pâles (24), le nombre N de pâles (24) étant de préférence compris entre 2 et 20, de préférence égal à 8.

8. Rotor (14) selon l'une quelconque des revendications précédentes, dans lequel la ou chaque pâle (24) présente un extrados (EXT), un intrados (INT), un bord d'attaque (40) et un bord de fuite (42), le bord d'attaque (40) étant le bord de la pâle (24) s'étendant selon la direction radiale (R) et disposé en amont suivant le sens de l'écoulement du liquide le long de la pâle (24), le bord de fuite (42) étant le bord de la pâle (24) opposé au bord d'attaque (40) et disposé en aval suivant le sens de l'écoulement du liquide le long de la pâle (24),
dans lequel au moins une portion d'au moins une pâle (24) présente, en section transversale selon un plan perpendiculaire à la direction radiale (R), un profil (44) comportant une partie épaisse (46) et une partie fine (48), la partie épaisse (46) et la partie fine (48) ayant chacune une épaisseur maximale (E1, E2) selon une direction perpendiculaire à l'extrados (EXT), l'épaisseur maximale (E1) de la partie épaisse (46) étant au moins quatre fois supérieure à l'épaisseur maximale (E2) de la partie fine (48),
et dans lequel la longueur curviligne (L2) de la partie fine (48) est comprise entre 0,1 fois la longueur (C) de la corde entre le bord d'attaque (40) et le bord de fuite (42) et 0,9 fois la longueur (C) de ladite corde, de préférence comprise entre 0,25 fois la longueur (C) de ladite corde et 0,9 fois la longueur (C) de ladite corde.

9. Hydrolienne (10) comprenant un rotor (14) et un stator (12), **caractérisée en ce que** le rotor (14) est conforme à l'une quelconque des revendications précédentes.

## Patentansprüche

1. Rotor (14) eines Meeresströmungskraftwerks, wobei der Rotor (14) geeignet ist, um durch eine Strömung einer Flüssigkeit drehend angetrieben zu werden, wobei der Rotor (14) einen Innenring (20), einen Außenring (22) und wenigstens ein Schaufelblatt (24) aufweist, das sich zwischen dem Innenring (20) und dem Außenring (22) in eine radiale Richtung (R) erstreckt, wobei der Innenring (20) und der Außenring (22) auf einer gleichen Längsachse (X) zentriert sind; wobei der Rotor wenigstens eine radiale Achse (26), die sich zwischen dem Innenring (20) und dem Außenring (22) radial erstreckt, wenigstens ein Schaufelblatt, das um eine jeweilige radiale Achse (26) drehbar ist, und Mittel (28) zur Begrenzung der Drehbewegung des wenigstens einen Schaufelblatts (24) um seine jeweilige radiale Achse (26) aufweist, wobei die Begrenzungsmittel (28) für das wenigstens eine Schaufelblatt (24) einen oberen Anschlag (50A, 50B) aufweisen, der an dem Außenring (22) angeordnet ist, und sie **dadurch gekennzeichnet sind, dass** sie einen unteren Anschlag (52A, 52B) aufweisen, der an dem Innenring (20) angeordnet ist.

2. Rotor (14) nach Anspruch 1, wobei die Begrenzungsmittel (28) für das wenigstens eine Schaufelblatt (24) einen ersten Anschlag (50A, 52A) und einen zweiten Anschlag (50B, 52B) aufweisen, die an wenigstens einem Ring von dem Innenring (20) und dem Außenring (22) angeordnet sind, wobei der erste Anschlag (50A, 52A) einer ersten Richtung (S1) der Strömung in Bezug auf den Rotor (14) zugeordnet ist und der zweite Anschlag (50B, 52B) einer zweiten Richtung (S2) der Strömung in Bezug auf den Rotor (14) zugeordnet ist.

3. Rotor (14) nach Anspruch 2, wobei die Begrenzungsmittel (28) für das wenigstens eine Schaufelblatt (24) einen ersten oberen Anschlag (50A) und einen zweiten oberen Anschlag (50B), die an dem Außenring (22) angeordnet sind, sowie einen ersten unteren Anschlag (52A) und einen zweiten unteren Anschlag (52B) enthalten, die an dem Innenring (20) angeordnet sind, wobei die ersten Anschläge (50A, 52A) einer ersten Richtung der Strömung (S1) zugeordnet sind und die zweiten Anschläge (50B, 52B) einer zweiten Richtung der Strömung (S2) zugeordnet sind.

4. Rotor (14) nach einem beliebigen der vorhergehenden Ansprüche, wobei die Begrenzungsmittel (28) für das wenigstens eine Schaufelblatt (24) einen oberen Anschlag (50A, 50B) enthalten, der an dem Außenring (22) angeordnet ist, wobei das Schaufelblatt (24) bei fehlender Strömung eine Ruheposition aufweist und der Wert des Winkels (θ1ₘₐₓ) zwischen der Ruheposition und einer Position des Schaufelblattes (24) in Anlage gegen den oberen Anschlag zwischen 10 Grad und 30 Grad liegt, vorzugsweise gleich 20 Grad ist.

5. Rotor (14) nach einem beliebigen der vorhergehenden Ansprüche, wobei die Begrenzungsmittel (28) für das wenigstens eine Schaufelblatt (24) einen unteren Anschlag (52A, 52B) enthalten, der an dem Innenring (20) angeordnet ist, wobei das Schaufelblatt (24) bei fehlender Strömung eine Ruheposition aufweist und der Wert des Winkels (θ2ₘₐₓ) zwischen der Ruheposition und einer Position des Schaufelblattes (24) in Anlage gegen den unteren Anschlag (52A, 52B) zwischen 30 Grad und 60 Grad liegt, vorzugsweise gleich 45 Grad ist.

6. Rotor (14) nach einem beliebigen der vorhergehenden Ansprüche, wobei der Rotor (14) für jedes Schaufelblatt (24) eine radiale Achse (26) aufweist, die sich radial zwischen dem Innenring (20) und dem Außenring (22) erstreckt, wobei jedes Schaufelblatt (24) um seine jeweilige radiale Achse (26) drehbar ist und die Begrenzungsmittel (28) geeignet sind, um die Drehbewegung jedes Schaufelblattes (24) zu begrenzen.

7. Rotor (14) nach einem beliebigen der vorhergehenden Ansprüche, wobei der Rotor (14) mehrere Schaufelblätter (24) aufweist, wobei die Anzahl (N) der Schaufelblätter (24) vorzugsweise zwischen 2 und 20 liegt, bevorzugterweise gleich 8 ist.

8. Rotor (14) nach einem beliebigen der vorhergehenden Ansprüche, wobei das oder jedes Schaufelblatt (24) eine Außenseite (EXT), eine Innenseite (INT), eine Anströmkante (40) und eine Abströmkante (42) aufweist, wobei die Anströmkante (40) die Kante des Schaufelblattes (24) ist, die sich in die radiale Richtung (R) erstreckt und die in der Richtung der Strömung der Flüssigkeit entlang des Schaufelblattes (24) stromaufwärts angeordnet ist, wobei die Abströmkante (42) die zu der Anströmkante (40) entgegengesetzte Kante des Schaufelblattes (24) ist und in der Richtung der Strömung der Flüssigkeit entlang des Schaufelblattes (24) stromabwärts angeordnet ist,
wobei wenigstens ein Abschnitt wenigstens eines Schaufelblattes (24) im Querschnitt durch eine zu der radialen Richtung (R) senkrechte Ebene ein Profil (44) aufweist, das einen dicken Abschnitt (46) und einen dünnen Abschnitt (48) aufweist, wobei der dicke Abschnitt (46) und der dünne Abschnitt (48) jeweils eine maximale Dicke (E1, E2) in einer zu der Außenseite (EXT) senkrechten Richtung aufweisen, wobei die maximale Dicke (E1) des dicken Abschnitts (46) wenigstens viermal so groß ist wie die maximale Dicke (E2) des dünnen Abschnitts (48),
und wobei die Länge der gebogenen Linie (L2) des dünnen Abschnitts (48) zwischen 0,1 mal die Länge (C) der Sehne zwischen der Anströmkante (40) und der Abströmkante (42) und 0,9 mal die Länge (C) dieser Sehne liegt, vorzugsweise zwischen 0,25 mal die Länge (C) der Sehne und 0,9 mal die Länge (C) der Sehne beträgt.

9. Meeresströmungskraftwerk (10), das einen Rotor (14) und einen Stator (12) aufweist, **dadurch gekennzeichnet, dass** der Rotor (14) einem beliebigen der vorhergehenden Ansprüche entspricht.

## Claims

1. Water turbine rotor (14), the rotor (14) being able to be driven in rotation by a current of a liquid, the rotor (14) comprising an inner ring (20), an outer ring (22) and at least one blade (24) extending between the inner ring (20) and the outer ring (22) in a radial direction (D), the inner ring (20) and outer ring (22) being centred on a same longitudinal axis, the rotor (14) comprising at least one radial shaft (26) extending radially between the inner ring (20) and the outer ring (22), at least one blade (24) mobile in rotation about a respective radial shaft (26), and means (28) for limiting the rotational movement of said at least one blade (24) about its respective radial shaft (26), said limitation means (28) comprise, for said at least one blade (24), a high stop (50A, 50B) arranged on the outer ring (22) and are **characterized in that** they comprise at least one low stop (52A, 52B) arranged on the inner ring (20).

2. Rotor (14) according to claim 1, wherein the limitation means (28) comprise, for said at least one blade (24), a first stop (50A, 52A) and a second stop (50B, 52B) arranged on at least one ring of the inner ring (20) and the outer ring (22), the first stop (50A, 52A) being associated with a first direction (S1) of the current relative to the rotor (14), and the second stop (50B, 52B) being associated with a second direction (S2) of the current relative to the rotor (14).

3. Rotor (14) according to claim 2, wherein the limitation means (28) comprise, for said at least one blade (24), a first high stop (50A) and a second high stop (50B) arranged on the outer ring (22), and a first low stop (52A) and a second low stop (52B) arranged on the inner ring (20), the first stops (50A, 52A) being associated with the first current direction (S1) and the second stops (50B, 52B) being associated with the second current direction (S2).

4. Rotor (14) according to any of the preceding claims, wherein the limitation means (28) comprise, for said at least one blade (24), a high stop (50A, 50B) arranged on the outer ring (22), the blade assumes a rest position in the absence of current, and the value of the angle (θ1ₘₐₓ) between the rest position and a position of the blade (24) lying against the high stop is between 10 degrees and 30 degrees, preferably equal to 20 degrees.

5. Rotor (14) according to any of the preceding claims, wherein the limitation means (28) comprise, for said at least one blade (24), a low stop (52A, 52B) arranged on the inner ring (20), the blade assumes a rest position in the absence of current, and the value of the angle (θ2ₘₐₓ) between the rest position and a position of the blade (24) lying against the low stop (52A, 52B) is between 30 degrees and 60 degrees, preferably equal to 45 degrees.

6. Rotor (14) according to any of the preceding claims, wherein the rotor (14) comprises, for each blade (24), a radial shaft (26) extending radially between the inner ring (20) and the outer ring (22), each blade (24) is mobile in rotation about its respective radial shaft (26), and the limitation means (28) are able to limit the rotational movement of each blade (24).

7. Rotor (14) according to any of the preceding claims, wherein the rotor (14) comprises a plurality of blades (24), the number N of blades (24) being preferably between 2 and 20, preferably equal to 8.

8. Rotor (14) according to any of the preceding claims, wherein the or each blade (24) has an upper surface (EXT), a lower surface (INT), a leading edge (40) and a trailing edge (42), the leading edge (40) being the edge of the blade (24) extending in the radial direction (D) and arranged upstream in the direction of flow of liquid along the blade (24), the trailing edge (42) being the edge of the blade (24) opposite the leading edge (40) and arranged downstream in the direction of flow of the liquid along the blade (24),
wherein at least one portion of at least one blade (24) presents, in cross section along a plane perpendicular to the radial direction (R), a profile (44) with a thick portion (46) and a fine portion (48), the thick portion (46) and the fine portion (48) each having a maximum thickness (E1, E2) in a direction perpendicular to the upper surface (EXT), the maximum thickness (E1) of the thick portion (46) being at least four times greater than the maximum thickness (E2) of the fine portion (48),
and wherein the curvilinear length (L2) of the fine portion (48) is between 0.1 times the length (C) of the chord between the leading edge (40) and the trailing edge (42) and 0.9 times the length (C) of said chord, preferably between 0.25 times the length (C) of said chord and 0.9 times the length (C) of said chord.

9. Water turbine (10) comprising a rotor (14) and a stator (12), **characterised in that** the rotor (14) is in accordance with any of the preceding claims.
